# EUROPÄISCHE PATENTSCHRIFT

(11) **EP 3 097 379 B1**
(45) Veröffentlichungstag und Bekanntmachung des Hinweises auf die Patenterteilung: **17.04.2019**
(21) Anmeldenummer: 15701339.2
(22) Anmeldetag: 23.01.2015
(51) Int. Cl.: F28F 9/02, F28D 1/04

(54) **WÄRMEÜBERTRAGER**
HEAT EXCHANGER
ÉCHANGEUR DE CHALEUR

(30) Priorität: 23.01.2014 DE 102014201264
(43) Veröffentlichungstag der Anmeldung: 30.11.2016
(73) Patentinhaber: Mahle International GmbH, 70376 Stuttgart (DE)
(72) Erfinder: LIEDTKE, Oliver, 74915 Waibstadt (DE); MAGDALINSKI, Matthias, 74354 Besigheim (DE)
(74) Vertreter: Grauel, Andreas
(86) Internationale Anmeldenummer: PCT/EP2015/051364
(87) Internationale Veröffentlichungsnummer: WO 2015/110581

(56) Entgegenhaltungen:
- DE-A1- 19 961 199
- DE-A1- 19 961 199
- JP-A- H03 260 597
- JP-A- H09 152 298
- US-A1- 2008 169 085
- US-A1- 2008 169 085

## Beschreibung

### Technisches Gebiet

Die Erfindung betrifft einen Wärmeübertrager, insbesondere in einem Kraftfahrzeug, insbesondere einen Wärmeübertrager zum Kühlen von Ladeluft für einen Verbrennungsmotor in dem Kraftfahrzeug. Ein Wärmeübertrager nach dem Oberbegriff des Anspruchs 1 ist z.B. aus DE 199 61 199 bekannt.

### Stand der Technik

In einem Kraftfahrzeug kann ein Wärmeübertrager in einem Ansaugtrakt eines aufgeladenen Verbrennungsmotors als Ladeluftkühler (LLK) eingesetzt werden. Der Ladeluftkühler ist typischerweise zwischen einem Verdichter, insbesondere einem Verdichterrad eines Turboladers oder Kompressors in einem Ansaugtrakt des Verbrennungsmotors und einem Einlassventil angeordnet und dient dazu, einen Teil der Wärme abzuführen, die durch die Verdichtung der Luft in einem Turbolader entstehen kann. Dadurch kann die Leistung und der Wirkungsgrad des Verbrennungsmotors erhöht werden.

Ein gestufter, sequentieller Ladeluftkühler, der auch als indirekter Ladeluftkühler (iLLK) bezeichnet wird, wird typischerweise motornah zwischen dem Verdichter und einer Drosselklappe angeordnet sein und als Luft-/Kühlmittelkühler arbeiten. Dies geschieht typischerweise, indem der Ladeluft Wärme entzogen wird und die Ladeluft folglich gekühlt werden kann. In einer kompakten Ausführungsform weist der indirekte Ladeluftkühler (iLLK) zwei voneinander unabhängige, getrennte Kühlmittelkreisläufe auf, wobei die Luft in einem Niedertemperaturkühler eines Niedertemperaturkreislaufs rückgekühlt wird. Bekannte indirekte Ladeluftkühler weisen typischerweise ein RippenRohr-System auf.

Aus der DE 10 2010 063 324 A1 ist eine Vorrichtung zur Kühlung von Ladeluft für einen Verbrennungsmotor eines Fahrzeuges bekannt. Die Vorrichtung umfasst eine Mehrzahl von ersten Kühlmittelrohren zum Führen eines ersten Kühlmittels und eine Mehrzahl von zweiten Kühlmittelrohren zum Führen eines zweiten Kühlmittels, wobei die ersten Kühlmittelrohre und die zweiten Kühlmittelrohre sich entlang einer Längserstreckungsrichtung der Vorrichtung erstrecken und die Mehrzahl von ersten Kühlmittelrohren bezüglich der Mehrzahl von zweiten Kühlmittelrohren in einer Quererstreckungsrichtung der Vorrichtung benachbart angeordnet sind. Die endseitigen Sammelkästen sind dabei jeweils mit einem gemeinsamen Boden und gemeinsamen Sammelkastendeckeln gebildet, in welchen Trennwände zur Unterteilung vorgesehen sind.

### Darstellung der Erfindung, Aufgabe, Lösung, Vorteile

Es ist die Aufgabe der Erfindung, einen Wärmeübertrager zu schaffen, der einen verbesserten Aufbau aufweist und einfach herzustellen ist.

Dies wird erreicht mit einem Wärmeübertrager mit den Merkmalen von Anspruch 1.

In einem Ausführungsbeispiel des Wärmeübertragers, insbesondere für ein Kraftfahrzeug, mit einem ersten Kühlmittelkreislauf, der mehrere erste Rohre aufweist, und einem zweiten Kühlmittelkreislauf, der mehrere zweite Rohre aufweist, mit einem Boden, wobei der Boden eine Sicke aufweist, und wobei der Boden einen ersten Bodenbereich mit Öffnungen zur Aufnahme der ersten Rohre und einen zweiten Bodenbereich mit Öffnungen zur Aufnahme der zweiten Rohre aufweist, mit einer Abdeckung, die mit dem Boden verbunden ist, wobei die Abdeckung einen ersten Sammelkasten und einen zweiten Sammelkasten aufweist, wobei der erste Sammelkasten mit dem ersten Bodenbereich fluiddicht verbunden ist und der zweite Sammelkasten mit dem zweiten Bodenbereich fluiddicht verbunden ist, wobei die Abdeckung zwischen dem ersten und dem zweiten Sammelkasten eine Öffnung zur Aufnahme der Sicke aufweist. Die Sicke ist bevorzugt eine rinnenförmige Vertiefung, die in den Boden eingeprägt ist. Somit kann der Boden eine Bodenprägung aufweisen.

Die ersten Rohre und die zweiten Rohre sind bevorzugt Kühlmittelrohre, durch die ein Kühlmittel strömen kann. Bevorzugt sind die Rohre als Flachrohre ausgebildet. Der erste Sammelkasten ist hierbei bevorzugt im Wesentlichen parallel zu dem ersten Bodenbereich und der zweite Sammelkasten ist bevorzugt im Wesentlichen parallel zu dem zweiten Bodenbereich des Bodens des Wärmeübertragers angeordnet. Eine Sammelkastenseitenwand des ersten und/oder zweiten Sammelkastens sind/ist im Wesentlichen senkrecht zum Boden angeordnet.

Bevorzugt ist die Öffnung der Abdeckung ausgestanzt. Die Ausstanzung kann eine Ausnehmung ausbilden. Somit können die Sicke im Boden und die bevorzugt gegenüberliegend der Sicke angeordnete Ausnehmung in Eingriff miteinander treten, wenn der Wärmeübertrager zusammengesetzt wird, insbesondere wenn der erste und der zweite Sammelkasten mit den ersten und den zweiten Rohren verbunden werden. Hierdurch kann eine optimale Zentrierung zwischen dem Boden mit der Sicke und der Ausnehmung an der Abdeckung erfolgen. Insbesondere kann die Ausnehmung an oder benachbart zu der jeweiligen Sammelkastenwand angeordnet sein.

Bevorzugt weist der Boden einen umlaufenden Bereich auf. Hierdurch kann nach dem Verbinden des jeweiligen Sammelkastens mit dem Boden eine Verbindungsnaht entstehen, die bevorzugt umlaufend ist. Nach dem Lötprozess sind der Boden und der erste und der zweite Sammelkasten umlaufend verlötet und bilden eine umlaufende Lötnaht aus.

Bevorzugt ist die Abdeckung mit dem Boden kraft- und formschlüssig verbunden. Beispielsweise ist die Abdeckung mit dem Boden verlötet. Die Verbindungstechnik kann auch eine andere an sich bekannte Verbindungstechnik sein. Beispielsweise können die Abdeckung und der Boden verschweißt sein, insbesondere kann dann eine Schweißnaht im Bereich der Sicke und der Ausnehmung ausgebildet sein. Dadurch kann eine fluiddichte Verbindung direkt zwischen dem Boden und dem jeweiligen Sammelkasten realisiert werden, so dass der erste Kühlmittelkreislauf und der zweite Kühlmittelkreislauf zuverlässig getrennt sind, insbesondere an der Schnittstelle zum jeweiligen Bodenbereich. Eine mögliche Undichtigkeit in dem ersten und/oder dem zweiten Sammelkasten kann zunächst immer nach außen gehen. So kann keine interne Undichtigkeit auftreten. Insbesondere kann es nicht zu einer Verbindung zwischen dem ersten und dem zweiten Kühlmittelkreislauf kommen und eine Kopplung der Kühlmittelkreisläufe kann ausgeschlossen werden.

Bevorzugt bildet die Abdeckung mit dem Boden einen ersten Zulaufkanal für den ersten Sammelkasten, einen ersten Ablaufkanal für den ersten Sammelkasten sowie einen zweiten Kanal für den zweiten Sammelkasten aus.

Der Boden kann hierbei Öffnungen für den ersten Zulaufkanal, den ersten Ablaufkanal und den zweiten Kanal aufweisen. Hierbei kann der zweite Kanal ebenfalls einen Zulaufkanal und einen Ablasskanal aufweisen. An dem ersten und/oder zweiten Sammelkasten können ein erster Zulaufstutzen, ein erster Ablaufstutzen, ein zweiter Zulaufstutzen und ein zweiter Ablaufstutzen angeordnet sein. Die Stutzen können mit den zugehörigen Kanälen verbunden sein oder verbunden werden.

Bevorzugt weist der Boden Öffnungen für den ersten Zulaufkanal, den ersten Ablaufkanal, den zweiten Zulaufkanal und/oder den zweiten Ablaufkanal auf.

Der Boden wird bevorzugt in einem separaten Verfahrensschritt mit dem jeweiligen Sammelkasten verbunden, insbesondere in einem Lötofen. Hierbei ist die Lötung zwischen dem Boden und dem jeweiligen Sammelkasten direkt erfolgt und nicht nur aufgrund einer Außenlötung des Sammelkastens oder Teilen des Sammelkastens, wie dies im Stand der Technik häufig der Fall ist. Vorteilhaft ist hierbei, dass eine Trennung des ersten und des zweiten Kühlmittelkreislaufes erfolgen kann, ohne dass eine Trennwand mit den hierzu notwendigen aufwendigen Montagenachteilen zwischen dem ersten und dem zweiten Kühlmittelkreislauf an der Schnittstelle zwischen dem ersten und dem zweiten Sammelkasten angeordnet wird. Es kann somit ein Trennwandwerkzeug eingespart werden.

Bevorzugt sind ein erster und ein zweiter Wärmeübertrager vorgesehen, wobei das erste Wärmeübertragerelement im ersten Kühlmittelkreislauf ein Hochtemperaturkühler ist. Besonders bevorzugt arbeitet dieser im I-Flow-Prinzip. Hierbei kann am ersten Sammelkasten ein Flansch, an den ein Einlasskanal angeordnet ist, vorgesehen sein, durch den das Kühlmittel in die ersten Rohre gelangen kann. Gegenüberliegend am anderen Ende der ersten Rohre ist dann bevorzugt ein weiterer erster Sammelkasten angeordnet, an dem ein Auslasskanal für das Kühlmittel angeordnet ist.

In einer Ausgestaltung ist das zweite Wärmeübertragerelement im zweiten Kühlmittelkreislauf ein Niedertemperaturkühler. Das zweite Wärmeübertragerelement mit dem zweiten Kühlmittelkreislauf kann hierbei als U-Flow-Wärmeübertragerelement aufgebaut sein. Hierbei sind ein Einlasskanal am Flansch und ein Auslasskanal am Flansch an dem zweiten Sammelkasten angeordnet.

Der Wärmeübertrager ist insbesondere ein indirekter Ladeluftkühler. Hierdurch kann ein besserer Wärmeübergang zwischen der Ladeluft und dem Kühlmittel bzw. zwischen dem Kühlmittel und der Umgebungsluft bei Betrieb im Niedertemperaturkreislauf erzielt werden. Dies kann eine Leistungssteigerung der Ladeluftkühlung erlauben.

Der Niedertemperaturkühler (iLLK) und der Hochtemperaturkühler (iLLK) können über den Boden mit dem aufgelöteten ersten und zweiten Sammelkasten miteinander verbunden sein. Der Niedertemperaturkühler und der Hochtemperaturkühler gehören hierbei unterschiedlichen Kühlmittelkreisläufen an, insbesondere dem ersten Kühlmittelkreislauf und dem zweiten Kühlmittelkreislauf. Durch die gelötete Sicke/Ausstanzung-Verbindung sind der erste und der zweite Kühlmittelkreislauf sicherströmungsmechanisch getrennt und es kann keine strömungsmechanische Kopplung erfolgen. Die Trennung ist hierbei hundert Prozent dicht (100% dicht).

In einer Ausgestaltung weist der Wärmeübertrager eine Trennwand im zweiten Kühlmittelkreislauf auf, die eingerichtet ist, eine Trennung eines Kühlmittelvorlaufs und eines Kühlmittelrücklaufes zu realisieren. Die Trennwand ist hierbei bevorzugt mit dem Boden verbunden und einer dem Boden gegenüberliegenden Wand des Sammelkastens und trennt im zweiten Sammelkasten den Vorlauf und den Rücklauf. Somit kann eine Umlenkung des Kühlmittels erfolgen.

Vorteilhaft ist auch, dass ein erstes Wärmeübertragerelement und ein zweites Wärmeübertragerelement vorgesehen sind, die benachbart und parallel zueinander angeordnet sind.

Dabei ist es zweckmäßig, wenn das erste Wärmeübertragerelement und das zweite Wärmeübertragerelement jeweils Rohre aufweist, wobei die Rohre des ersten und des zweiten Wärmeübertragerelements parallel zueinander angeordnet sind.

Die Aufgabe wird ebenfalls mit einem Kraftfahrzeug mit einem erfindungsgemäßen Wärmeübertrager gelöst. Hierbei ist der Wärmeübertrager bevorzugt ein im Saugrohr integrierter sequentieller Ladeluftkühler mit zwei getrennten Kühlmittelkreisläufen.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnungen näher erläutert. Es zeigen:
- Fig. 1: einen ersten Sammelkasten mit einem Boden und Rohren eines Wärmeübertragers in Explosionsdarstellung,
- Fig. 2: den Wärmeübertrager von Figur 1 in einem Gehäuse in perspektivischer Darstellung,
- Fig.3: den Wärmeübertrager mit Blick auf einen ersten Sammelkasten und einen zweiten Sammelkasten,
- Fig. 4: den Wärmeübertrager mit dem ersten Sammelkasten und dem zweiten Sammelkasten in Schnittdarstellung entlang der Längserstreckung der ersten und der zweiten Rohre,
- Fig. 5: eine Fotographie einer umlaufenden Lötung am ersten und zweiten Sammelkasten.

### Bevorzugte Ausführung der Erfindung

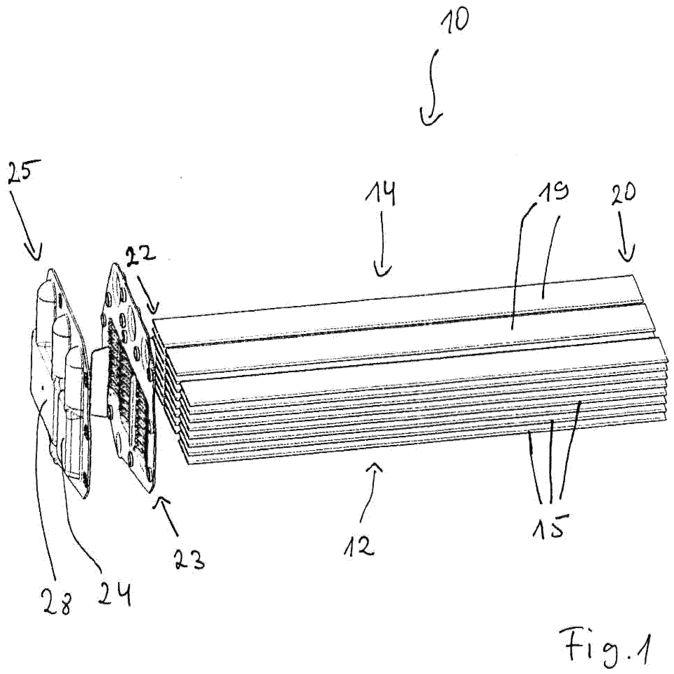

Die Figur 1 zeigt in Explosionsdarstellung einen Wärmeübertrager 10. Der Wärmeübertrager 10 ist in dem gezeigten Ausführungsbeispiel ein Ladeluftkühler 10 und kann der Kühlung von Ladeluft für einen Verbrennungsmotor eines Kraftfahrzeuges dienen. Der Wärmeübertrager 10 weist in dem dargestellten Ausführungsbeispiel ein erstes Wärmeübertragerelement 12 auf, das als I-Flow-Wärmeübertrager aufgebaut ist, und ein zweites Wärmeübertragerelement 14, das als U-Flow-Wärmeübertrager aufgebaut ist. Das erste Wärmeübertragerelement 12 ist bevorzugt ein Hochtemperaturkühler und das zweite Wärmeübertragerelement 14 ist bevorzugt ein Niedertemperaturkühler. Das erste Wärmeübertragerelement 12 ist Teil eines ersten Kühlmittelkreislaufs (nicht dargestellt) und das zweite Wärmeübertragerelement ist Teil eines zweiten Kühlmittelkreislaufs (nicht dargestellt). Der Wärmeübertrager 10 kann hierbei insbesondere ein sequentieller, indirekter Ladeluftkühler (iLLK) 10 sein.

Der indirekte Ladeluftkühler kann zwei voneinander unabhängige, getrennte Kühlmittelkreisläufe aufweisen. In einem solchen gestuften, sequentiellen indirekten Ladeluftkühler wird die heiße Ladeluft, in einer Stufe, mit warmem Kühlmittel beispielsweise aus dem Hauptkühlkreislauf des Motors vorgekühlt und in einer stromab liegenden zweiten Stufe mit kaltem Kühlmittel eines Niedertemperaturkühlers abgekühlt. Eine bekannte Bauweise eines sequentiellen indirekten Ladeluftkühlers ist das Rippe-Rohr-System.

Der erste Kühlmittelkreislauf mit dem Wärmeübertragerelement 12 und der zweite Kühlmittelkreislauf mit dem zweiten Wärmeübertragerelement 14 weisen jeweils eine Mehrzahl von Rohren 15, 19 auf, wobei durch die Rohre 15 des ersten Kühlmittelkreislaufs ein erstes Kühlmittel und durch die Rohre 19 des zweiten Kühlmittelkreislaufs ein zweites Fluid strömen kann. Die Rohre 15 und 19 sind bevorzugt Flachrohre. Hierbei sind die Kühlmittelkreisläufe bevorzugt unabhängig voneinander und können insbesondere bei unterschiedlichen Parametern betrieben werden. Beispielsweise können das Kühlmittel des ersten Kühlmittelkreislaufs und das Kühlmittel des zweiten Kühlmittelkreislaufs unter unterschiedlichem Druck stehen. Das Kühlmittel kann ein flüssiges oder ein gasförmiges Fluid sein.

Im Folgenden sind alle Gegenstände, die mit "erstem" bezeichnet sind, dem ersten Kühlmittelkreislauf bzw. dem ersten Wärmeübertragerelement 12 zugehörig. Gegenstände, die mit "zweiten" bezeichnet sind, sind dem zweiten Kühlmittelkreislauf bzw. dem zweiten Wärmeübertragerelement 14 zugehörig.

Die ersten Rohre 15 des ersten Wärmeübertragerelements 12 sind in Längserstreckungsrichtung 16 des Wärmeübertragers 10 in einem nicht dargestellten Gehäuse angeordnet. Die Rohre 15, 19 sind jeweils an einem ersten Rohrende 20 und/oder an einem zweiten Rohrende 22 an oder in einem Boden 23 angeordnet und werden durch diesen in ihrer Position fixiert. Der Boden 23 ist, in Längserstreckungsrichtung 16 der Rohre 15, 19 gesehen, zwischen den Rohren 15 und einem ersten Sammelkasten 24 sowie zwischen den Rohren 19 und einem zweiten Sammelkasten 28, der benachbart zu dem ersten Sammelkasten 24 angeordnet ist, angeordnet. Der erste und der zweite Sammelkasten 24 und 28 sind bevorzugt jeweils an beiden Enden 20, 22 der Rohre 15, 19 angeordnet. An dem ersten Sammelkasten 24 am Ende 20 ist ein Anschlusskanal oder Auslasskanal 26 angeordnet. Der erste und der zweite Sammelkasten 24 und 28 sind im Wesentlichen wannenartig ausgebildet. Der erste Sammelkasten 24 und der zweite Sammelkasten 28 bilden zusammen die Abdeckung 25 aus.

Die zweiten Rohre 19 des zweiten Wärmeübertragerelements 14 sind in Längserstreckungsrichtung 16 gesehen im Wesentlichen parallel zueinander und parallel zu den ersten Rohren 15 des ersten Wärmeübertragerelements 12 angeordnet.

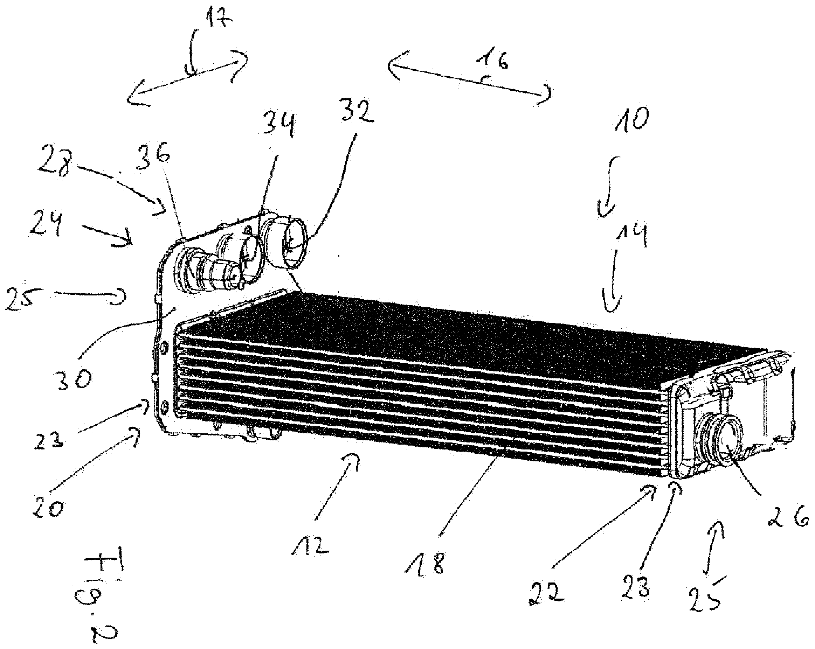

In Figur 2 ist der Wärmeübertrager 10 in perspektivischer Darstellung in zusammenmontiertem Zustand gezeigt. Gleiche Teile sind mit denselben Bezugszeichen bezeichnet.

Die Rohre 15, 19, insbesondere Flachrohre 15, 19, sind optional in einem Gehäuse 18 angeordnet und bilden den Rohr-Rippenblock eines Rippe-Rohr-Wärmeübertragers. Die Abdeckung 25 weist den ersten Sammelkasten 24 und den zweiten Sammelkasten 28 auf und schließt das Gehäuse 18 zumindest an einer der Seiten 20, 22 ab. Bevorzugt ist an jeder Seite eine Abdeckung 25 angeordnet. Am Ende 20 der Rohre 15 und 19 ist ein Flansch 30 angeordnet. An dem Flansch 30 können ebenfalls der Boden 23 und die Abdeckung 25 angeordnet sein. Bevorzugt weist der Flansch 30 zumindest einen umlaufenden, über die in Quererstreckungsrichtung 17 der Rohre 15 und 19 hinausragenden Bereich auf. Bevorzugt weist der Flansch 30 einen über die Abdeckung 25 hinausragenden Bereich auf.

An dem Flansch 30 sind ein erster Zulaufkanal 32 und ein erster Auslasskanal 34 angeordnet. Ferner ist am Flansch 30 ein zweiter Anschlusskanal 36, der bevorzugt ein Zulaufkanal 36 ist, gegenüberliegend dem ersten Anschlusskanal 26, der bevorzugt ein Auslasskanal 26 ist, angeordnet. Der Zulaufkanal 32 und der Auslasskanal 34 sind Teil des als U-Flow ausgebildeten Wärmeübertragerelements 14. Der Kanal 26 und der Kanal 36 sind Teil des als I-Flow ausgebildeten Wärmeübertragerelements 12. Der Boden 23 ist zwischen der Abdeckung 25, die den ersten Sammelkasten 24 und den zweiten Sammelkasten 28 aufweist, und den Rohren 15 und 19 angeordnet.

Die Ausführungsform des Wärmeübertragers 10 als ein dreiteiliger Wärmeübertrager 10 ist lediglich beispielhaft zu verstehen. Der Wärmeübertrager 10 kann ebenfalls ein vierteiliger Wärmeübertrager sein, der zwei U-Flow Wärmeübertragerelemente aufweist.

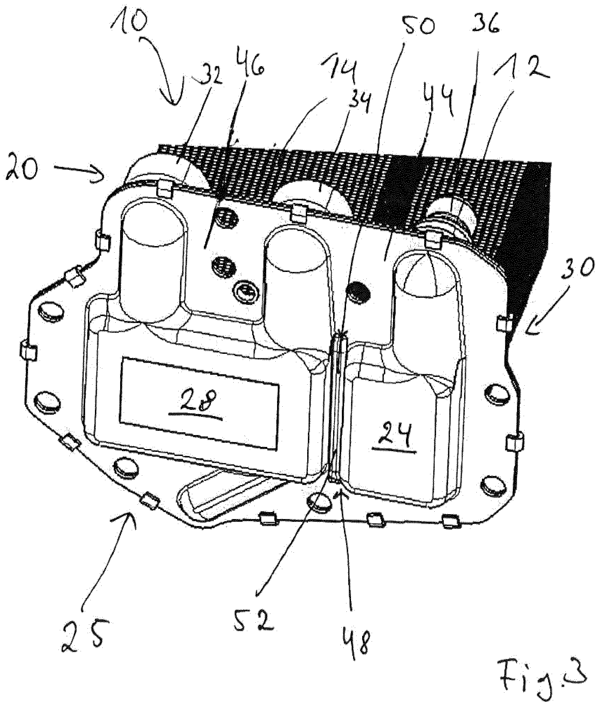

Figur 3 zeigt den Wärmeübertrager 10 in perspektivischer Darstellung mit Blickrichtung auf die Abdeckung 25 und zwar am Ende 20 der Rohre 15 und 19. Der Boden 23 umfasst im Bereich des jeweiligen Sammelkastens 24, 28 den ersten Bodenabschnitt 44 und den zweiten Bodenabschnitt 46, wobei der erste Bodenabschnitt 44 dem ersten Sammelkasten 24 zugeordnet und der zweite Bodenabschnitt 46 dem zweiten Sammelkasten 28 zugeordnet ist.

Zwischen dem ersten Bodenabschnitt 44 und dem zweiten Bodenabschnitt 46 ist eine Verbindungsnaht 48 angeordnet. Die Verbindungsnaht 48 ist gebildet, indem eine Sicke 52 in eine Ausnehmung 50 eingreift und verlötet ist. Der erste Sammelkasten 24 ist hierbei direkt mit dem Boden 23 fluiddicht verbunden, bevorzugt nicht lösbar verbunden. Die Verbindung zwischen dem Boden 23 kann bevorzugt mittels Löten realisiert sein. Es kann aber auch jede andere an sich bekannte Verbindungstechnik verwendet werden, wie beispielsweise Kleben oder Schweißen, die geeignet ist, eine fluiddichte Verbindung herzustellen, insbesondere von einer in der Ausnehmung 50 angeordneten Sicke 52. Hierdurch ist eine kraft- und formschlüssige Verbindung zwischen dem Boden 23 und der Abdeckung 25 hergestellt.

Eine Mehrzahl von ersten Rohren 15 des ersten Wärmeübertragerelements 12 ist an oder in dem ersten Bodenabschnitt 44 angeordnet und an oder in diesem fixiert. Eine Mehrzahl von zweiten Rohren 19 ist in dem zweiten Bodenabschnitt 46 angeordnet und an oder in diesem fixiert. Der Verbindungsabschnitt 48 oder die Verbindungsnaht 48 weist die im Sammelkasten 24 und/oder dem Sammelkasten 28, insbesondere in der Abdeckung 25, eingebrachte Ausstanzung 50 und die in dem Boden 23 angeordnete Sicke 52 auf. Die Sicke 52 kann mit der Ausnehmung 50 oder Ausstanzung 50 in Eingriff treten, insbesondere in mechanischem Eingriff. Die Ausstanzung/Sicke-Paarung kann die Montage des Sammelkastens 24 am Boden 23 erheblich vereinfachen, indem eine nahezu automatische Zentrierung erfolgen kann. Nach dem Verbindungsprozess, bevorzugt dem Lötprozess bildet die Ausstanzung/Sicke-Verbindung die Verbindungsnaht 48, bevorzugt die Lötnaht 48 aus.

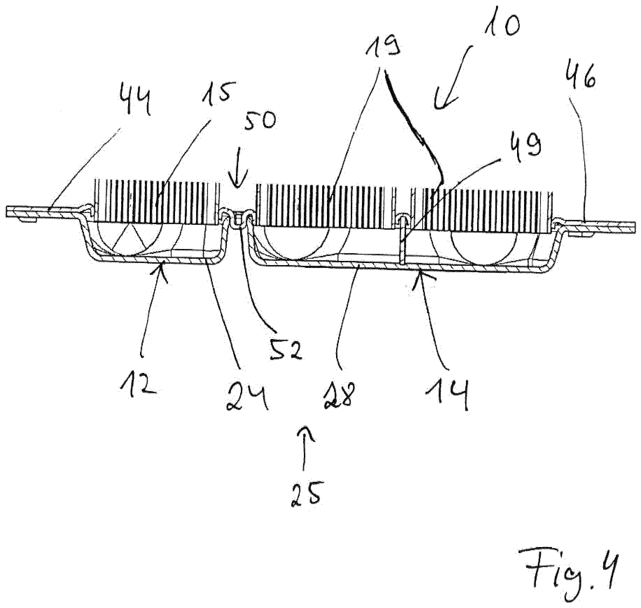

Zwischen dem Vorlauf und dem Rücklauf des zweiten Wärmeübertragerelements 14 ist im Sammelkasten 28 eine Trennwand 49 angeordnet, die eine Umlenkung des Kühlmittelflusses zwischen Kühlmittelvorlauf und Kühlmittelrücklauf realisieren kann. Die Trennwand 49 ist in der Schnittdarstellung des Wärmeübertragers 10 von Figur 4 gezeigt.

Der erste Sammelkasten 24 und der zweite Sammelkasten 28 können als einteiliges Bauteil, als die Abdeckung 25, ausgebildet sein. Der erste Sammelkasten 24 und der zweite Sammelkasten 28 können auch zunächst zweiteilig hergestellt sein und so verbunden werden, dass die Abdeckung 25 entsteht.

Die Ausstanzung 50 ist derart gewählt, dass die Sicke 52 in diese hineinragen kann.

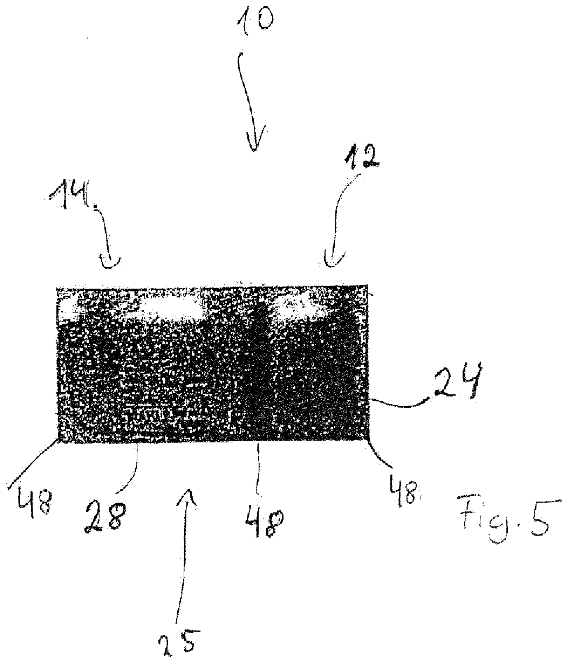

Figur 5 ist eine Darstellung eines montierten und gelöteten Wärmeübertragers 10 in Draufsicht auf den Sammelkasten 24 und 28, also in Längserstreckungsrichtung 16 gesehen frontal auf den ersten Sammelkasten 24 und den zweiten Sammelkasten 28. Erkennbar ist die Verbindungsnaht 48, die als Lötnaht 48 ausgebildet ist. Die Verbindungsnaht 48 ist bevorzugt eine umlaufende Verbindungsnaht 48 oder Teil einer umlaufenden Verbindungsnaht.

## Patentansprüche

1. Wärmeübertrager, insbesondere für ein Kraftfahrzeug, mit einem ersten Kühlmittelkreislauf, der mehrere erste Rohre (15) aufweist, und einem zweiten Kühlmittelkreislauf, der mehrere zweite Rohre (19) aufweist, mit einem Boden (23), wobei der Boden (23) eine Sicke (52) aufweist, wobei der Boden (23) einen ersten Bodenbereich (44) mit Öffnungen zur Aufnahme der ersten Rohre (15) und einen zweiten Bodenbereich (46) mit Öffnungen zur Aufnahme der zweiten Rohre (19) aufweist, mit einer Abdeckung (25), die mit dem Boden (23) verbunden ist, **dadurch gekennzeichnet, dass** die Abdeckung (25) einen ersten Sammelkasten (24) und einen zweiten Sammelkasten (28) aufweist, wobei der erste Sammelkasten (24) mit dem ersten Bodenbereich (44) fluiddicht verbunden ist und der zweite Sammelkasten (28) mit dem zweiten Bodenbereich (46) fluiddicht verbunden ist, wobei die Abdeckung (25) zwischen dem ersten und dem zweiten Sammelkasten (24, 28) eine Öffnung (50) zur Aufnahme der Sicke (52) aufweist.

2. Wärmeübertrager nach Anspruch 1, **dadurch gekennzeichnet, dass** die Öffnung (50) der Abdeckung (25) ausgestanzt ist.

3. Wärmeübertrager nach einem der vorhergehenden Ansprüche, **dadurch gekennzeichnet, dass** der Boden (23) einen umlaufenden Bereich aufweist.

4. Wärmeübertrager nach einem der vorhergehenden Ansprüche, **dadurch gekennzeichnet, dass** die Abdeckung (25) mit dem Boden (23) kraft- und formschlüssig verbunden ist.

5. Wärmeübertrager nach einem der vorhergehenden Ansprüche, **dadurch gekennzeichnet, dass** die Abdeckung (25) mit dem Boden (23) einen zweiten Zulaufkanal (32) und einen zweiten Ablaufkanal (36, 26) für den zweiten Sammelkasten (28) sowie einen ersten Kanal (26, 36) für den ersten Sammelkasten (24) ausbildet.

6. Wärmeübertrager nach einem der vorhergehenden Ansprüche, **dadurch gekennzeichnet, dass** der Boden (23) Öffnungen für einen ersten Zulaufkanal (26, 36), den ersten Ablaufkanal (36, 26) und den Zulauf- und Ablaufkanal (32, 34) aufweist.

7. Wärmeübertrager nach einem der vorhergehenden Ansprüche, **dadurch gekennzeichnet, dass** der Wärmeübertrager (10) ein indirekter Ladeluftkühler zum Kühlen von Ladeluft ist.

8. Wärmeübertrager nach einem der vorhergehenden Ansprüche, **dadurch gekennzeichnet, dass** ein erstes Wärmeübertragerelement (12) und ein zweites Wärmeübertragerelement (14) vorgesehen sind, die benachbart und parallel zueinander angeordnet sind.

9. Wärmeübertrager nach einem der vorhergehenden Ansprüche, **dadurch gekennzeichnet, dass** das erste Wärmeübertragerelement (12) und das zweite Wärmeübertragerelement (14) jeweils Rohre aufweist, wobei die Rohre des ersten und des zweiten Wärmeübertragerelements parallel zueinander angeordnet sind.

10. Kraftfahrzeug mit einem Wärmeübertrager (10), insbesondere einem Ladeluftkühler, nach einem der vorhergehenden Ansprüche,

## Claims

1. A heat exchanger, in particular for a motor vehicle, having a first coolant circuit which has multiple first tubes (15), and having a second coolant circuit which has multiple second tubes (19), having a plate (23), wherein the plate (23) has a bead (52), wherein the plate (23) has a first plate region (44) with openings for receiving the first tubes (15) and a second plate region (46) with openings for receiving the second tubes (19), having a cover (25) which is connected to the plate (23), **characterised in that** the cover (25) has a first collecting tank (24) and a second collecting tank (28), wherein the first collecting tank (24) is connected in fluid-tight fashion to the first plate region (44) and the second collecting tank (28) is connected in fluid-tight fashion to the second plate region (46), wherein the cover (25) has, between the first and the second collecting tank (24, 28), an opening (50) for receiving the bead (52).

2. The heat exchanger as claimed in claim 1, **characterised in that** the opening (50) is punched out of the cover (25).

3. The heat exchanger as claimed in one of the preceding claims, **characterised in that** the plate (23) has an encircling region.

4. The heat exchanger as claimed in one of the preceding claims, **characterised in that** the cover (25) is connected to the plate (23) in non-positively locking and positively locking fashion.

5. The heat exchanger as claimed in one of the preceding claims, **characterised in that** the cover (25), together with the plate (23), forms a second inflow duct (32) and a second outflow duct (36, 26) for the second collecting tank (28) and a first duct (26, 36) for the first collecting tank (24).

6. The heat exchanger as claimed in one of the preceding claims, **characterised in that** the plate (23) has openings for a first inflow duct (26, 36), the first outflow duct (36, 26) and the inflow and outflow duct (32, 34).

7. The heat exchanger as claimed in one of the preceding claims, **characterised in that** the heat exchanger (10) is an indirect charge-air cooler for the cooling of charge air.

8. The heat exchanger as claimed in one of the preceding claims, **characterised in that** a first heat exchanger element (12) and a second heat exchanger element (14) are provided, which are arranged adjacent and parallel to one another.

9. The heat exchanger as claimed in one of the preceding claims, **characterised in that** the first heat exchanger element (12) and the second heat exchanger element (14) each have tubes, wherein the tubes of the first and of the second heat exchanger element are arranged parallel to one another.

10. A motor vehicle having a heat exchanger (10), in particular a charge-air cooler, as claimed in one of the preceding claims.

## Revendications

1. Echangeur de chaleur, en particulier pour un véhicule automobile, comprenant un premier circuit de liquide de refroidissement qui présente plusieurs premiers tubes (15), et comprenant un deuxième circuit de liquide de refroidissement qui présente plusieurs deuxièmes tubes (19), comprenant un fond (23), où le fond (23) présente une moulure (52), où le fond (23) présente une première zone de fond (44) comportant des ouvertures servant au logement des premiers tubes (15) et une deuxième zone de fond (46) comportant des ouvertures servant au logement des deuxièmes tubes (19), comprenant un élément de recouvrement (25) qui est assemblé avec le fond (23), **caractérisé en ce que** l'élément de recouvrement (25) présente un premier bac collecteur (24) et un deuxième bac collecteur (28), où le premier bac collecteur (24) est relié de manière fluidiquement étanche à la première zone de fond (44), et le deuxième bac collecteur (28) est relié de manière fluidiquement étanche à la deuxième zone de fond (46), où l'élément de recouvrement (25) présente, entre le premier et le deuxième bac collecteur (24, 28), une ouverture (50) servant au logement de la moulure (52).

2. Echangeur de chaleur selon la revendication 1, **caractérisé en ce que** l'ouverture (50) de l'élément de recouvrement (25) est découpée par matriçage.

3. Echangeur de chaleur selon l'une des revendications précédentes, **caractérisé en ce que** le fond (23) présente une zone périphérique.

4. Echangeur de chaleur selon l'une quelconque des revendications précédentes, **caractérisé en ce que** l'élément de recouvrement (25) est assemblé avec le fond (23) par action de force et par complémentarité de forme.

5. Echangeur de chaleur selon l'une quelconque des revendications précédentes, **caractérisé en ce que** l'élément de recouvrement (25) forme, avec le fond (23), un deuxième conduit d'arrivée (32) et un deuxième conduit d'évacuation (36, 26) pour le deuxième bac collecteur (28), ainsi qu'un premier conduit (26, 36) pour le premier bac collecteur (24).

6. Echangeur de chaleur selon l'une quelconque des revendications précédentes, **caractérisé en ce que** le fond (23) présente des ouvertures pour un premier conduit d'arrivée (26, 36), pour le premier conduit d'évacuation (36, 26) et pour le conduit d'arrivée et d'évacuation (32, 34).

7. Echangeur de chaleur selon l'une quelconque des revendications précédentes, **caractérisé en ce que** l'échangeur de chaleur (10) est un refroidisseur indirect d'air de suralimentation servant au refroidissement de l'air de suralimentation.

8. Echangeur de chaleur selon l'une quelconque des revendications précédentes, **caractérisé en ce qu'**il est prévu un premier élément d'échangeur de chaleur (12) et un deuxième élément d'échangeur de chaleur (14) qui sont disposés de manière adjacente et parallèle l'un par rapport à l'autre.

9. Echangeur de chaleur selon l'une quelconque des revendications précédentes, **caractérisé en ce que** le premier élément d'échangeur de chaleur (12) et le deuxième élément d'échangeur de chaleur (14) présentent respectivement des tubes, où les tubes du premier et du deuxième élément d'échangeur de chaleur sont disposés en étant parallèles les uns aux autres.

10. Véhicule automobile comprenant un échangeur de chaleur (10), en particulier un refroidisseur d'air de suralimentation, selon l'une quelconque des revendications précédentes.
